# EUROPÄISCHE PATENTSCHRIFT

(11) **EP 1 168 591 B1**
(45) Veröffentlichungstag und Bekanntmachung des Hinweises auf die Patenterteilung: **22.06.2011**
(21) Anmeldenummer: 01108909.1
(22) Anmeldetag: 10.04.2001
(51) Int. Cl.: H02P 6/08, H02H 7/085

(54) **Drehmomentbegrenzter Elektromotor, insbesondere Wischermotor**
Torque limited electric motor, in particular windshield wiper motor
Moteur à couple limité, notamment moteur d'essuie-glace

(30) Priorität: 30.06.2000 DE 10031925
(43) Veröffentlichungstag der Anmeldung: 02.01.2002
(73) Patentinhaber: ROBERT BOSCH GMBH, 70442 Stuttgart (DE)
(72) Erfinder: Zimmer, Joachim, 77880 Sasbach (DE)

(56) Entgegenhaltungen:
- EP-A- 0 458 211
- DE-A- 19 615 581
- US-A- 5 347 214
- US-A- 5 689 159
- US-A- 5 847 530

## Beschreibung

### Stand der Technik

Die Erfindung betrifft einen Wischermotor zum Betreiben einer Vorrichtung zum Wischen einer Scheibe eines Kraftfahrzeugs, eine Serie von Wischermotoren, sowie ein Verfahren zur Herstellung eines Wischermotors mit den Merkmalen der unabhängigen Ansprüche 1, 8 und 9. Es sind schon zahlreiche Elektromotoren zum Betreiben einer Wischvorrichtung bekannt, die in sehr großen Stückzahlen in Serie hergestellt werden.

In einer auf herkömmliche Weise produzierten Serie von Elektromotoren tritt aufgrund von Fertigungs- und Materialtoleranzen eine Streuung der abgegebenen Leistung der einzelnen Elektromotoren auf. Um eine Wischvorrichtung zuverlässig betreiben zu können, wird der Elektromotor derart ausgelegt, dass auch die schwächsten Elektromotoren der Serie zum Antreiben der Wischvorrichtung in der Lage sind. Problematisch ist dabei jedoch, dass die Wischvorrichtung so ausgelegt sein muß, dass sie - insbesondere im Blockierfall - durch die stärksten Elektromotoren der Serie nicht beschädigt wird. Daher müssen die bewegten Teile der Wischvorrichtung grundsätzlich stabiler dimensioniert sein, als es für den normalen Betrieb der Wischeranlage erforderlich ist.

Diese zwangsweise Überdimensionierung erhöht die Material- und Fertigungskosten und vergrößert die Abmessungen und damit den benötigten Raum der Wischeranlage im Kraftfahrzeug.

Die US-A-5 347 214 und US-A-5 847 530 offenbaren Elektromotoren nach dem Stand der Technik.

### Vorteile der Erfindung

Der erfindungsgemäße Wischermotor mit den Merkmalen des Hauptanspruchs hat den Vorteil, dass eine Leistungsbegrenzung durch einen Parameter auf eine sehr einfache und schnelle Weise am Ende einer Serienfertigung zu realisieren ist. Übliche Elektromotoren zum Betreiben einer Wischvorrichtung sind ohnedies mit einer Elektronik zur Steuerung/Regelung ausgestattet, in welche eine solche Leistungsbegrenzung leicht zu implementieren ist.

Durch die in den Unteransprüchen aufgeführten Maßnahmen ergeben sich vorteilhafte Weiterbildungen und Verbesserungen des erfindungsgemäßen Wischermotors nach dem Hauptanspruch.

Von besonderem Vorteil ist es, wenn die Steuereinrichtung einen Signaleingang zur Zuführung des Parameters, des Soll-Drehmoments oder eines Ist-Drehmoments aufweist, um den Parameter selbst oder eine oder mehrere Größen zur Bestimmung des Parameters in die Steuereinrichtung einspeisen zu können.

Weiterhin ist es vorteilhaft, wenn die Steuereinrichtung eine Speichereinrichtung zur Speicherung des Parameters aufweist. Auf diese Weise muß der Parameter nur kurzzeitig, beispielsweise bei einer Überprüfung am Ende einer Fertigungsstraße, zugeführt werden. Dort bleibt er bis zu einer Änderung oder bis zum Ende der Lebensdauer des Wischermotors gespeichert.

Ist die Steuereinrichtung darüber hinaus als elektronische Steuereinrichtung ausgebildet, so stehen alle Möglichkeiten, die eine moderne Steuerung oder Regelung benötigt, zur Verfügung. Auf diese Weise können auch komplexere Algorithmen zur Steuerung/Regelung verwendet werden.

Weist die elektronische Steuereinrichtung einen Mikrocontroller zur Berechnung und/oder Speicherung des Parameters auf, so wird die Speicher- und Steuerungskomplexität noch weiter erhöht.

Ist der Mikrocontroller in der Lage aus dem zugeführten Soll- und/oder Ist-Drehmoment den Parameter selbst zu bestimmen, so wird der Zeit- und Arbeitsaufwand bei einer Bandendeüberprüfung auf ein Minimum reduziert und dadurch die Kosten weiter gesenkt.

Weiterhin ist vorteilhaft den Parameter aus dem Quotienten von Soll-Drehmoment und Ist-Drehmoment zu bilden, da dieser lineare Ansatz einfach zu handhaben und für viele Fälle ausreichend genau ist

Eine Serie von Wischermotoren, welche mit einem Parameter zur Leistungsbegrenzung versehen sind, wobei alle Wischermotoren der Serie das gleiche Soll-Drehmoment abgeben, hat den Vorteil, dass eine genau passende Auslegung des Gestänges der Wischvorrichtung möglich ist, da das Gestänge der Wischvorrichtung keine Leistungsüberkapazitäten der Wischermotoren aufnehmen muß.

Das erfindungsgemäße Verfahren zur Herstellung eines Wischermotors hat den Vorteil, dass sämtliche Wischermotoren die mittels dieses Verfahrens hergestellt sind, in ihrer Abgabeleistung, bzw. in ihrem Drehmoment genau begrenzt sind.

Wird die Leistungsgröße durch mechanisches Abbremsen des angetriebenen Wischermotors bei gleichzeitiger Messung einer weiteren Kenngröße bestimmt, so ist dies besonders vorteilhaft, da im Regelfall bei einer Bandendekontrolle am Ende eines Fertigungsbandes ein Testlauf durchgeführt wird und so die Programmierung des Steuergerätes direkt nach Ende des Testlaufes stattfinden kann. Der Abbremsvorgang am Ende des Testlaufs kann dabei zur Bestimmung der Leistungsgröße ausgenutzt werden.

### Zeichnungen

Ein Ausführungsbeispiel der Erfindung ist in den Zeichnungen dargestellt und in der nachfolgenden Beschreibung näher erläutert. Es zeigen:
Figur 1 eine schematishe Darstellung eines erfindungsgemäßen Wischermotors,
Figur 2 eine schematische Darstellung des Verfahrens zur Herstellung eines Wischermotors und
Figur 3 ein Gestänge einer Wischvorrichtung in schematischer Darstellung.

### Beschreibung der Ausführungsbeispiele

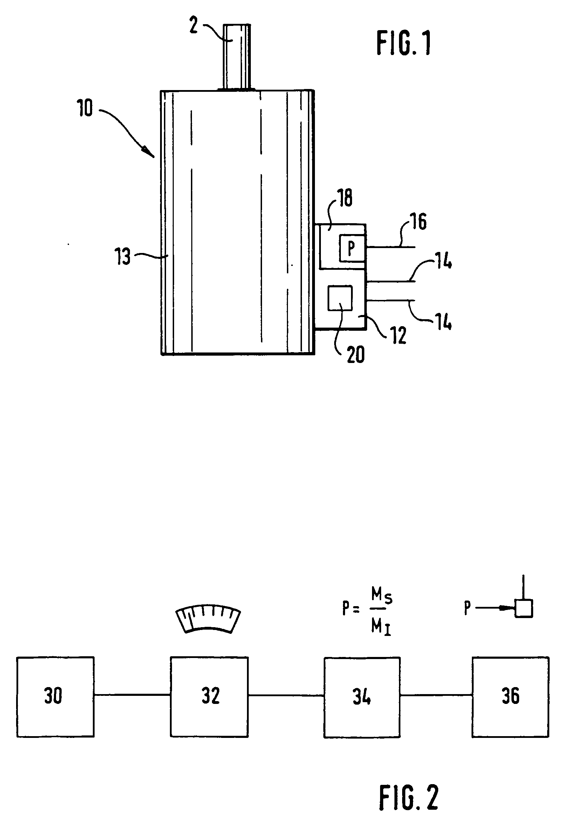

In Figur 1 ist ein erfindungsgemäßer Wischermotor 10 mit einer Steuereinrichtung 12 und einem Motorteil 13 dargestellt. Die Steuereinrichtung 12 ist dabei als elektronische Steuereinrichtung ausgebildet, welche das Motorteil 13 in Abhängigkeit von Eingangssignalen, die durch Anschlusspins 14 vermittelt werden, steuert. Die Steuereinrichtung 12 weist darüber hinaus noch einen Signaleingang 16 auf, durch den die Steuereinrichtung 12 programmiert werden kann. Insbesondere weist die Steuereinrichtung 12 dazu eine Speichereinheit 18 auf, in welcher ein Parameter P ablegbar ist. Typischerweise wird der Signaleingang 16 mehrere, insbesondere 8 oder 16 Pins umfassen, um in herkömmlicher Technik die Steuereinrichtung 12 digital zu programmieren.

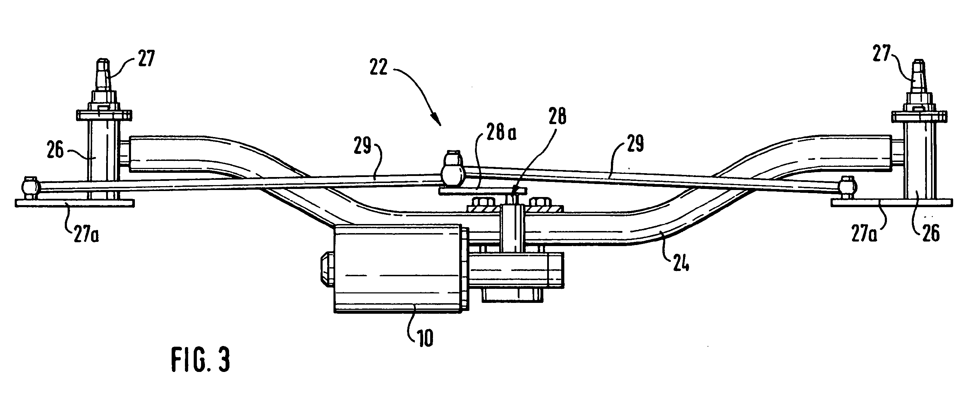

In Figur 3 ist das Gestänge 22 einer Wischvorrichtung mit einem Wischermotor 10 dargestellt.
Das Gestänge 22 besteht im wesentlichen aus einer Rohrplatine 24 an der der Wischermotor 10 etwa mittig befestigt ist. Die Rohrplatine hat zwei Enden, an denen jeweils ein Wischerlager 26 angeordnet ist. In diesen Wischerlagern sind die Wischerwellen 27 gelagert, die mit hier nicht dargestellten, Wischblätter tragenden Wischerarmen drehfest verbunden sind.

Eine Abtriebswelle 28 des Wischermotors 10 hat zum Antreiben der Wischerarme eine erste Kurbel 28a, die drehfest mit ihr verbunden ist. Diese bewegt eine Schubstange 29, welche wiederum, eine mit der Wischerwelle 27 drehfest verbundene, zweite Kurbel 27a antreibt. Dadurch entsteht eine Hin- und Herbewegung der Wischerwelle 27 und damit eine pendelnde Bewegung des Wischerarms und des Wischblatts.

Im folgenden wird die Funktion eines erfindungsgemäßen Wischermotors 10 erläutert.

Im Betrieb wird an die Anschlusspins 14 eine Spannung zwischen 0 und Umax angelegt. Erfindungsgemäß wird oder wurde der Steuereinrichtung 12 zusätzlich der Parameter P zumindest einmalig zugeführt. Dieser korrigiert den durch die Anschlusspins 14 fließenden Strom oder die am Motorteil 13 anliegende Spannung. Die Korrektur kann ein einfacher Faktor sein, um den der Strom I und/oder die Spannung U reduziert werden soll. Dazu ist der Parameter P so bemessen, dass das gewünschte maximale Motordrehmoment genau dann vom Motor abgegeben wird, wenn an den Anschlusspins 14 die Spannung Umax, insbesondere im Blockierfall, angelegt wird.

Dieser Parameter P wird beispielsweise am Ende des Fertigungsprozesses des Wischermotors 10 ermittelt, indem das vom Wischermotor 10 abgegebene Drehmoment bei der angelegten Maximalspannung Umax ermittelt wird und anschließend das gewünschte Solldrehmoment durch das ermittelte Drehmoment geteilt wird. Aus dieser Division ergibt sich ein Parameter, der gerade so groß ist, dass bei Anlegen der Maximalspannung Umax an die Anschlusspins 14 kein höheres als das gewünschte Maximaldrehmoment vom Wischermotor 10 erbracht werden kann.

Im Blockierfall, wenn die Wischerarme beispielsweise durch eine zu große Schneelast auf der Scheibe blockiert werden, wirkt auf das Gestänge 22 das maximale Drehmoment des Wischermotors 10. Durch die Begrenzung dieses Drehmoments, wird wirksam verhindert, daß sich beispielsweise die Kurbeln 27a und 28a oder die Schubstange 29 plastisch verformen.

Prinzipbedingt wird bei solchen Gleichstrommotoren das maximale Drehmoment bei Stillstand erreicht. Wird also der Wischermotor 10 abgebremst, so kann bei verschiedenen Drehzahlen das Drehmoment gemessen und auf das Stillstands- bzw. Maximaldrehmoment extrapoliert werden.
Der Parameter P wird nun so bestimmt, daß das maximale Drehmoment nicht überschritten wird.

In Figur 2 sind die Verfahrensschritte zur Herstellung eines erfindungsgemäßen Wischermotors dargestellt.

Im ersten Schritt 30 werden die Einzelkomponenten des Wischermotors 10 zusammenmontiert. In einem zweiten Schritt 32 wird das bei Umax abgegebene Drehmoment ermittelt und im dritten Schritt 34 das gewünschte Solldrehmoment durch das im zweiten Schritt 32 gemessene Maximaldrehmoment geteilt, beziehungsweise aus dem abgegebenen Drehmoment und dem Solldrehmoment der Parameter P ermittelt. Im vierten Schritt 36 wird dem im dritten Schritt 34 ermittelte Parameter P in die Speichereinrichtung 18 der Steuereinrichtung 12 eingegeben.

Die Leistungsgröße, wie beispielsweise das Maximaldrehmoment, kann durch mechanisches Abbremsen des angetriebenen Wischermotors bei gleichzeitiger Messung einer weiteren Kenngröße bestimmt werden. Beispielsweise kann der Motor durch eine magnetische Bremse abgebremst werden. Zur Bestimmung des Maximaldrehmoments eines Wischermotors sind jedoch auch zahlreiche weitere Verfahren bekannt.

Natürlich ist hier nur eines von beliebig vielen bekannten Verfahren zur Bestimmung des Parameters P angegeben. Der Parameter P ist nur jeweils so bemessen, dass bei Anlegen der Spannung Umax jeweils maximal das Solldrehmoment abgebbar ist.

## Patentansprüche

1. Wischermotor zum Betreiben einer Vorrichtung zum Wischen einer Scheibe eines Kraftfahrzeugs, mit einer Steuereinrichtung (12) zur Steuerung/Regelung der Leistung des Elektromotors (10) **dadurch gekennzeichnet, dass** die Steuereinrichtung (12) mit einem Parameter P zur Drehmomentbegrenzung auf ein Soll-Drehmoment programmierbar ist.

2. Wischermotor (10) nach Anspruch 1, **dadurch gekennzeichnet, dass** die Steuereinrichtung (12) mindestens einen Signaleingang (16) zur Zuführung des Parameters P, des Soll-Drehmoments und/oder eines Ist-Drehmoments aufweist.

3. Wischermotor (10) nach einem der vorhergehenden Ansprüche, **dadurch gekennzeichnet, dass** die Steuereinrichtung (12) eine Speichereinrichtung zur Speicherung des Parameters P aufweist.

4. Wischermotor (10) nach einem der vorhergehenden Ansprüche, **dadurch gekennzeichnet, dass** die Steuereinrichtung (12) als elektronische Steuereinrichtung ausgebildet ist.

5. Wischermotor (10) nach Anspruch 4, **dadurch gekennzeichnet, dass** die elektronische Steuereinrichtung (12) mindestens einen Microcontroller (20) zur Berechnung und/oder Speicherung des Parameters P aufweist.

6. Wischermotor (10) nach Anspruch 4, **dadurch gekennzeichnet, dass** die elektronische Steuereinrichtung (12) einen Microcontroller (20) zur Bestimmung des Parameters P aus dem zugeführten Soll- und/oder Ist-Drehmoment aufweist.

7. Wischermotor (10) nach einem der vorhergehenden Ansprüche, **dadurch gekennzeichnet, dass** der Parameter P aus dem Quotienten von Soll-Drehmoment und Ist-Drehmoment gebildet ist.

8. Serie von Wischermotoren, insbesondere Wischermotoren nach Anspruch 1, zur Steuerung/Regelung der abgebenden Leistung des Elektromotors (10) **dadurch gekennzeichnet, dass** die Steuereinrichtung (12) mit einem Parameter P zur Drehmomentbegrenzung auf eine Soll-Drehmoment, programmiert ist, so dass die Leistung jedes Wischermotors der Serie auf das identische maximale Soll-Drehmoment begrenzt ist.

9. Verfahren zur Herstellung eines Wischermotors (10), insbesondere eines Wischermotors nach Anspruch 1, mit einem Steuergerät (12) umfassend mindestens folgende Schritte:
Montage der Einzelkomponenten des Wischermotors (10),
Bestimmung einer Drehmomentgröße,
Bestimmung eines Parameters P zur Drehmomentbegrenzung,
Eingabe des Parameters P in das Steuergerät (12).

10. Verfahren nach Anspruch 9, **dadurch gekennzeichnet, dass** die Drehmomentgröße durch mechanisches Abbremsen des angetriebenen Elektromotors (10) bei gleichzeitiger Messung einer weiteren Kenngröße bestimmt wird.

## Claims

1. Wiper motor for operating an apparatus for wiping a windscreen of a motor vehicle, having a control device (12) for controlling/regulating the power of the electric motor (10), **characterized in that** the control device (12) can be programmed to a setpoint torque using a parameter P for limiting torque.

2. Wiper motor (10) according to Claim 1, **characterized in that** the control device (12) has at least one signal input (16) for supplying the parameter P, the setpoint torque and/or an actual torque.

3. Wiper motor (10) according to either of the preceding claims, **characterized in that** the control device (12) has a memory device for storing the parameter P.

4. Wiper motor (10) according to one of the preceding claims, **characterized in that** the control device (12) is in the form of an electronic control device.

5. Wiper motor (10) according to Claim 4, **characterized in that** the electronic control device (12) has at least one microcontroller (20) for calculating and/or storing the parameter P.

6. Wiper motor (10) according to Claim 4, **characterized in that** the electronic control device (12) has a microcontroller (20) for determining the parameter P from the supplied setpoint torque and/or actual torque.

7. Wiper motor (10) according to one of the preceding claims, **characterized in that** the parameter P is formed from the quotient of setpoint torque and actual torque.

8. Series of wiper motors, in particular wiper motors according to Claim 1, for controlling/regulating the output power of the electric motor (10), **characterized in that** the control device (12) is programmed to a setpoint torque using a parameter P for limiting torque, so that the power of each wiper motor in the series is limited to the identical maximum setpoint torque.

9. Method for producing a wiper motor (10), in particular a wiper motor according to Claim 1, having a controller (12) comprising at least the following steps:
mounting the individual components of the wiper motor (10),
determining a torque variable,
determining a parameter P for limiting torque,
entering the parameter P into the controller (12).

10. Method according to Claim 9, **characterized in that** the torque variable is determined by mechanically braking the driven electric motor (10) while at the same time measuring a further characteristic variable.

## Revendications

1. Moteur d'essuie-glace pour faire fonctionner un dispositif pour essuyer une vitre d'un véhicule automobile, comprenant un dispositif de commande (12) pour la commande/régulation de la puissance du moteur électrique (10), **caractérisé en ce que** le dispositif de commande (12) peut être programmé avec un paramètre P pour la limitation du couple à un couple de consigne.

2. Moteur d'essuie-glace (10) selon la revendication 1, **caractérisé en ce que** le dispositif de commande (12) présente au moins une entrée de signal (16) pour entrer le paramètre P, le couple de consigne et/ou un couple instantané.

3. Moteur d'essuie-glace (10) selon l'une quelconque des revendications précédentes, **caractérisé en ce que** le dispositif de commande (12) présente un dispositif de mémoire pour mémoriser le paramètre P.

4. Moteur d'essuie-glace (10) selon l'une quelconque des revendications précédentes, **caractérisé en ce que** le dispositif de commande (12) est réalisé sous forme de dispositif de commande électronique.

5. Moteur d'essuie-glace (10) selon la revendication 4, **caractérisé en ce que** le dispositif de commande électronique (12) présente au moins un microcontrôleur (20) pour calculer et/ou mémoriser le paramètre P.

6. Moteur d'essuie-glace (10) selon la revendication 4, **caractérisé en ce que** le dispositif de commande électronique (12) présente un microcontrôleur (20) pour déterminer le paramètre P à partir du couple de consigne et/ou du couple instantané entré.

7. Moteur d'essuie-glace (10) selon l'une quelconque des revendications précédentes, **caractérisé en ce que** le paramètre P est formé à partir du quotient du couple de consigne et du couple instantané.

8. Série de moteurs d'essuie-glace, en particulier moteurs d'essuie-glace selon la revendication 1, pour la commande/régulation de la puissance fournie par le moteur électrique (10), **caractérisée en ce que** le dispositif de commande (12) est programmé avec un paramètre P pour la limitation du couple à un couple de consigne, de sorte que la puissance de chaque moteur d'essuie-glace de la série soit limitée au couple de consigne maximal identique.

9. Procédé de fabrication d'un moteur d'essuie-glace (10), en particulier d'un moteur d'essuie-glace selon la revendication 1, comprenant un appareil de commande (12), comprenant au moins les étapes suivantes :
montage des composants individuels du moteur d'essuie-glace (10),
détermination d'une grandeur de couple,
détermination d'un paramètre P pour la limitation du couple,
entrée du paramètre P dans l'appareil de commande (12).

10. Procédé selon la revendication 9, **caractérisé en ce que** la grandeur du couple est déterminée par un freinage mécanique du moteur électrique entraîné (10) au cours de la mesure simultanée d'une autre grandeur caractéristique.
